# DEMANDE DE BREVET EUROPEEN

(11) **EP 1 023 950 A1**
(43) Date de publication de la demande: **02.08.2000**
(21) Numéro de dépôt: 00400124.4
(22) Date de dépôt: 18.01.2000
(51) Int. Cl.: B06B 1/06, G01V 1/18

(54) **Hydrophone directif à large bande, notamment pour antenne acoustique linéaire remorquée**

(30) Priorité: 26.01.1999 FR 9900832
(71) Demandeur: THOMSON MARCONI SONAR SAS, 06903 Sophia Antipolis (FR)
(72) Inventeur: Debost, Sophie, Thomson-CSF Prop. Intell., 94117 Arcueil Cedex (FR); Gragnolati, Claude, Thomson-CSF Prop. Intell., 94117 Arcueil Cedex (FR); Roux, Gérard, Thomson-CSF Prop. Intell., 94117 Arcueil Cedex (FR); Perrier, Marc, Thomson-CSF Prop. Intell., 94117 Arcueil Cedex (FR)
(74) Mandataire: Desperrier, Jean-Louis

(57) **Abrégé**

L'invention concerne les hydrophones directifs à large bande destinés à être intégrés dans une antenne acoustique linéaire remorquée.

Elle consiste à utiliser un double bilame (101,102) encastré entre deux poutres (103,104) et dont la largeur est au moins égale à la longueur, Ces deux poutres se terminent par deux masses d'inertie (105-108) de forme cylindrique comportant des trous (110) dans lesquels sont insérés des manchons élastiques et amortissants (109). Ces manchons permettent de fixer l'hydrophone à l'intérieur d'un centreur tubulaire faisant partie d'une section d'antenne acoustique linéaire remorquée.

## Description

La présente invention se rapporte aux hydrophones directifs à large bande qui peuvent être utilisés notamment dans les antennes acoustiques linéaires remorquées derrière des bateaux.

On sait que l'on utilise, notamment pour la prospection pétrolière, des antennes acoustiques linéaires que l'on remorque derrière un bateau afin de recueillir les signaux acoustiques se propageant dans le sein de la mer. Ces antennes acoustiques sont constituées de tuyaux très allongés dans lesquels sont disposés des hydrophones dont les signaux sont traités pour permettre d'obtenir des voies de réception directives. Afin en particulier de résoudre certains problèmes de lever de doute dus à la forme de ces voies, qui est généralement conique centrée sur l'axe de l'antenne, on est notamment amené à utiliser des hydrophones à large bande réalisés selon une technique particulière permettant de lever ce doute.

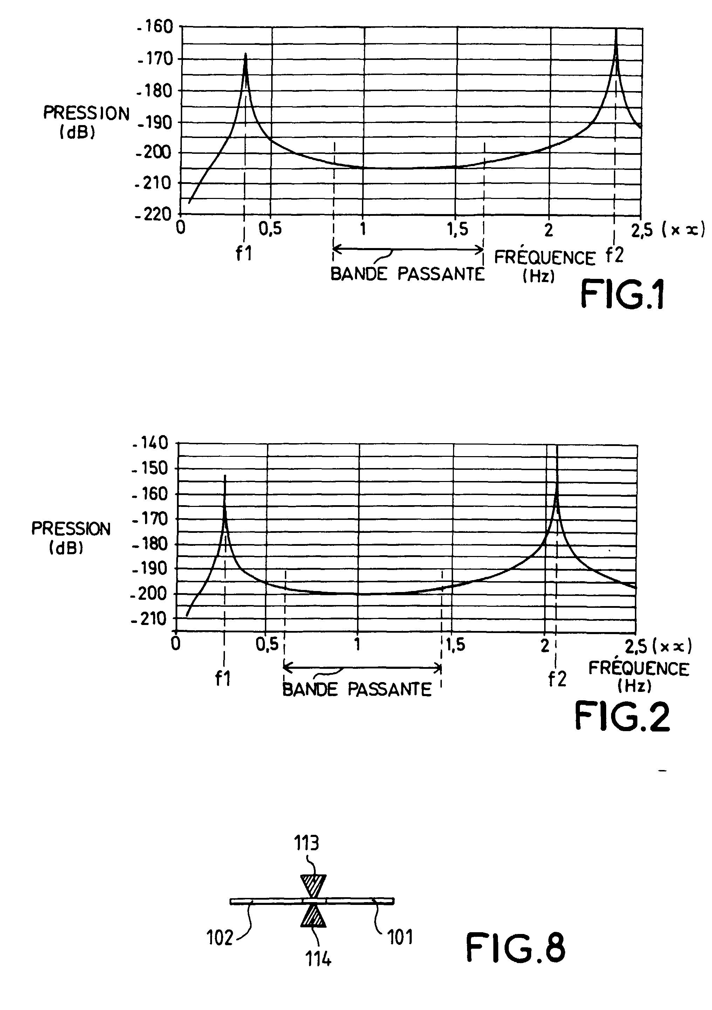

Un tel hydrophone est en particulier décrit dans la demande de brevet français déposée par la société THOMSON-CSF le 26 décembre 1991 sous le n° 91 16162, et délivrée le 25 février 1994 sous le n° 2 685 848. L'hydrophone divulgué dans cette demande est du type dit "de vitesse". Il comporte un capteur formé d'un bilame de plastique piézoélectrique du type PVDF, dont la largeur est au plus égale à la longueur. Ce bilame est encastré par l'une de ses extrémités dans une rainure ménagée dans un bloc massif. Cette technique d'encastrement correspond à un dispositif dit en mode "poutre". La courbe de sensibilité calculée d'un tel hydrophone est représentée sur la figure 1, avec en abscisses les fréquences s'étendant de 0 à 2,5 × X Hz, la valeur de X étant comprise entre 500 et 2000 par exemple, et en ordonnées les pressions acoustiques s'étendant de - 160 à -220 dB, ces pressions étant calculées sans amortissement.

On rappelle que cette sensibilité est proportionnelle à l'amplitude de la déformation en flexion du bilame sous l'effet de la composante normale de l'onde incidente.

On constate que cet hydrophone présente des fréquences de résonance en flexion dont les 2 premières apparaissent en f₁ et f₂. La bande utile est comprise entre ces 2 fréquences. Elle est déterminée en faisant varier les dimensions du bilame.

Cette figure correspond à un bilame présentant une longueur de 19 mm pour une largeur de 10 mm et une épaisseur de 1 mm, l'ensemble étant immergé dans l'eau.

Les valeurs des fréquences de résonance sont alors égales à f₁ = 0,35x Hz et f₂= 2,35x Hz. Le rapport de ces fréquences est donc égal à f₂ / f₁ = 6,7. En se plaçant dans une marge couramment admise de ± 1 dB, la bande passante de cet hydrophone est alors comprise entre 0,85x Hz et 1,15x Hz . Ceci est inférieur à une octave, alors que l'on souhaite généralement pouvoir utiliser une bande passante au moins égale à une octave.

Les résonances sont fortement surtendues car la courbe de réponse a été obtenue par calcul, en ne tenant pas compte des différents phénomènes d'amortissement, ce qui bien entendu n'est pas réaliste.

Par ailleurs un hydrophone de ce type présente d'autres inconvénients. L'un de ces inconvénients concerne les difficultés à obtenir un encastrement correct pour que les conditions aux limites soient effectivement bien respectées. Un autre inconvénient est l'entraînement en rotation du bloc d'encastrement lorsque le bilame fléchit, ce qui se traduit par une perte de sensibilité. Un autre inconvénient réside dans le fait que l'axe de sensibilité du PVDF se trouve suivant l'axe de remorquage, ce qui augmente la sensibilité aux vibrations.

Pour pallier ces inconvénients, l'invention propose un hydrophone à large bande, notamment pour antenne acoustique linéaire remorquée, du type comprenant au moins un bilame encastré dans une monture inertielle, principalement caractérisé en ce que la largeur du bilame est au moins égale à sa longueur.

Selon une autre caractéristique, la monture inertielle comprend deux poutres d'encastrement reliées à au moins une masse d'inertie et elle comporte en outre un deuxième bilame encastré entre les deux poutres de manière symétrique par rapport au premier bilame.

Selon une autre caractéristique, les bilames forment deux parties d'un sandwich piézoélectrique encastré symétriquement entre les deux poutres.

Selon une autre caractéristique, l'hydrophone comprend deux masses d'inertie situées respectivement aux deux extrémités des poutres.

Selon une autre caractéristique, ces deux masses d'inertie sont formées chacune de deux sous-masses fixées respectivement à chacun des deux barreaux d'encastrement.

Selon une autre caractéristique, les deux masses d'inertie ont la forme de deux cylindres coaxiaux à l'axe de l'hydrophone et elles comportent sur leurs faces d'extrémité extérieures des trous permettant de fixer des manchons amortissant élastiques destinés à fixer l'hydrophone de manière souple.

Selon une autre caractéristique, la largeur de l'hydrophone est sensiblement égale à trois fois sa longueur.

D'autres particularités et avantages de l'invention apparaîtront clairement dans la description suivante, faite en regard des figures annexés qui représentent:
- la figure 1, une courbe de sensibilité d'un hydrophone selon l'art antérieur;
- la figure 2, une courbe de sensibilité explicative;
- les figures 3 et 4, des courbes de sensibilité pour des valeurs différentes de l'amortissement;
- la figure 5, un exemple de réalisation d'un hydrophone selon l'invention;
- la figure 6, une courbe de sensibilité d'un hydrophone selon l'invention;
- la figure 7, un exemple de réalisation d'une section d'antenne acoustique linéaire intégrant deux hydrophones selon l'invention; et
- la figure 8, une variante de réalisation de l'encastrement d'un bilame dans un hydrophone selon l'invention.

En augmentant le rapport de la largeur à la longueur d'un bilame, on modifie ses modes de vibration propre. En particulier, quand la largeur d'un tel bilame dépasse sa longueur on constate que l'on voit apparaître des modes de vibration en largeur, ce qui correspond à un comportement dit "en plaque", par opposition au comportement dit "en poutre" cité plus haut.

On a représenté sur la figure 2, avec les mêmes paramètres que pour la figure 1, la courbe de sensibilité d'un bilame de même longueur et de même épaisseur que celui correspondant à la figure 1, mais présentant une largeur de 30 mm. Les fréquences de résonance en mode longueur sont égales à f₁ = 0,25x Hz et à f₂= 2,5x Hz, ce qui correspond à un rapport f₂/f₁ = 8,2. Ceci montre que l'on peut augmenter le rapport f₂/f₁ en augmentant le rapport largeur/longueur du bilame. L'augmentation de ce rapport entraîne corrélativement une augmentation de la bande passante à ± 1dB, qui dans ce cas s'étend entre 0,6x Hz et 1, 45x Hz. On voit donc que l'on a pu dépasser l'octave pour cette bande passante.

Par ailleurs on constate que la sensibilité à l'intérieur de ladite bande passante, exprimée en Vms/µPₐ à 1 m, est remontée de -205 dB à -200 dB. Des considérations théoriques permettent de montrer que l'augmentation de cette sensibilité correspond en première approximation au rapport des largeurs de bande en dB, soit 10 log (30/10) = 4,8 dB.

La largeur de la bande passante a augmenté dans les proportions souhaitées et a globalement baissé en fréquence du fait d'une surface de bilame plus importante. Pour compenser cet effet on est amené à diminuer la longueur du bilame, et corrélativement à augmenter sa largeur afin de ne pas perdre en sensibilité.

En utilisant ainsi par exemple un bilame de longueur 17 mm et de largeur 51 mm, ce qui correspond à un rapport largeur/longueur égal à 3, on obtient une bande passante à ±1dB qui s'étend de 0,77 X Hz à 1,84X Hz, avec une sensibilité égale à -200 dB,

Toutefois, comme expliqué plus haut, la figure 2 ne tient pas compte des différentes causes d'amortissement. En outre, en plus des facteurs cités plus haut, on observe que dans le cas d'un bilame de grande largeur il intervient un facteur d'amortissement modal dû à des pertes dont l'influence devient sensible. Il s'agit essentiellement des pertes mécaniques et électriques dans le matériau de type PVDF, des pertes au niveau du collage des deux lames qui forment le bilame, des pertes mécaniques au niveau de l'encastrement de celui-ci, et enfin des pertes provenant de la viscosité du fluide dans lequel le bilame est plongé.

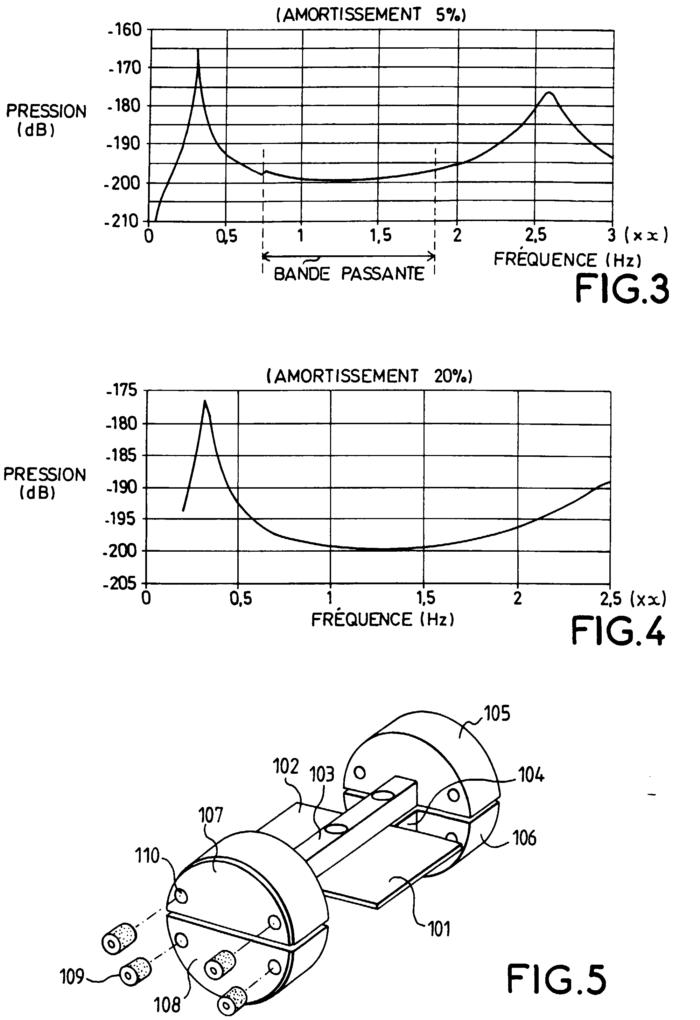

L'expérience a montré que cet amortissement modal variait entre deux valeurs extrêmes, égales respectivement à 5% pour la plus petite et à 20% pour la plus grande. Les courbes de sensibilité correspondant à ces deux valeurs extrêmes ont été représentées sur les figures 3 et 4. On constate sur ces figures que le mode largeur introduit une perturbation dont l'amplitude maximale est de 1 dB. La perturbation correspondante au niveau de la phase, non représentée sur la figure, est comprise entre 0° et 10° Ces valeurs sont tout à fait acceptables dans les utilisations courantes des bilames de ce type, en particulier dans celles citées dans l'introduction de ce texte.

La structure des bilames est parfaitement connue. On utilise deux couches de plastique piézo-électrique, du PVDF par exemple. Ces couches sont séparées par une électrode. Cette électrode centrale correspond généralement à la polarité positive du bilame. Chacune de ces couches est revêtue sur sa face extérieure d'une électrode. Ces électrodes extérieures sont réunies électriquement et correspondent à la polarité inverse de celle de l'électrode centrale, généralement la polarité négative .

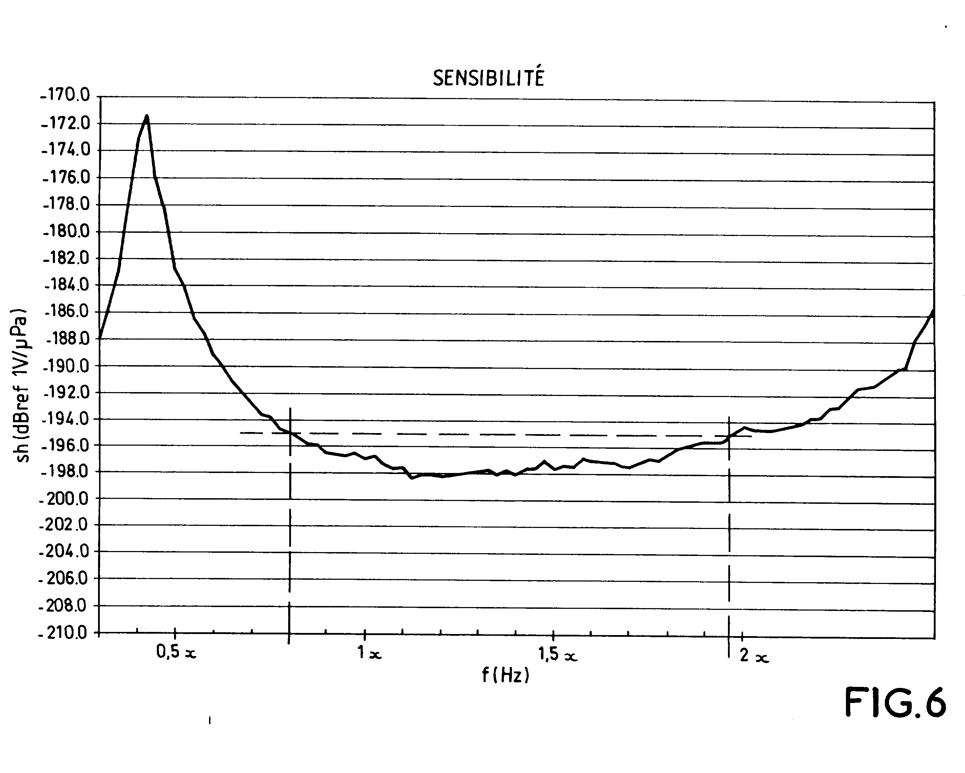

On a représenté sur la figure 5 un exemple de réalisation d'un hydrophone selon l'invention, qui comprend un bilame 101 encastré entre deux poutres 103 et 104 et dont la largeur est plus grande que la longueur. Pour symétriser cet hydrophone par rapport à l'axe longitudinal du dispositif dans lequel il doit être monté, on utilise un deuxième bilame 102, encastré symétriquement par rapport au bilame 101 entre ces deux poutres d'encastrement 103 et 104.

De manière préférentielle, les bilames 101 et 102 seront formés à partir d'un sandwich unique encastré entre les poutres 103 et 104 de façon à ce que deux parties de dimensions identiques du sandwich débordent de chaque côté des deux poutres ainsi réunies. C'est donc l'encastrement qui défini à partir de ce sandwich les deux bilames distincts. On obtient ainsi une configuration en forme dite " papillon", où la poutre d'encaissement est perpendiculaire à la direction sensible du bilame

Avec cette configuration on obtient une meilleure sensibilité intrinsèque par rapport au simple bilame, d'une part grâce à l'interaction mutuelle entre les 2 bilames qui améliore le couplage avec le fluide environnant et d'autre part par le fait que les moments induits par les 2 bilames sur l'encastrement s'annulent supprimant ainsi l'effet d'entraînement en rotation du bloc d'encastrement, En outre, dans le cas de l'utilisation de l'hydrophone dans une flûte, cette configuration procure une sensibilité moindre aux vibrations puisque dans ce cas c'est l'axe transversal du bilame, peu sensible, qui est confondu avec l'axe de remorquage.

Dans ce mode de réalisation, les poutres 103 et 104 se prolongent de part et d'autre du bilame par des masses d'inertie 105/106 d'un côté et 107/108 de l'autre. Ces masses d'inertie permettent, de manière connue, de maintenir fixes les encastrements des bilames vis à vis des efforts provoqués sur ceux-ci par les vibrations qu'ils doivent détecter. De manière préférentielle, dans ce mode de réalisation les masses d'inertie auront une forme semi-circulaire, de manière à former quant elles sont réunies deux cylindres coaxiaux à l'axe longitudinal de l'hydrophone et venant prolonger les poutres 103 et 104.

Les masses d'inertie transmettant de manière parasite des vibrations provenant de la structure dans laquelle sera intégré l'hydrophone, l'invention propose de fixer cet hydrophone à cette structure par l'intermédiaire de manchons élastiques et amortissants 109 placés dans des trous 110 ménagés sur les faces extérieures de ces cylindres.

L'hydrophone étant tenu des 2 côtés, le fléchissement des plots sous l'effet du poids de l'hydrophone n'entraîne pas de rotation et donc de désalignement préjudiciable à la qualité des signaux fournis,

En effet un tel défaut d'alignement correspond à une inclinaison du plan des bilames d'un angle θ par rapport à l'axe de l'antenne. L'hydrophone dans ce cas génère un bruit proportionnel à sin θ.

La figure 6 représente la courbe de sensibilité mesurée avec les dimensions 17x51 pour un bilame. On obtient une sensibilité de 197 dB réf 1V/1µPa dans une bande à ±1,5 dB variant de 0,8x Hz à 1,96 X Hz.

L'invention propose également, à titre de variante de réalisation, de réaliser les poutres 103 et 104 sous une forme présentant une section triangulaire, telle que représentée en coupe sur la figure 8. Ces poutres 113 et 114 sont alors placées de manière à ce que les sommets des triangles correspondent, afin de serrer les bilames entre deux surfaces extrêmement étroites.

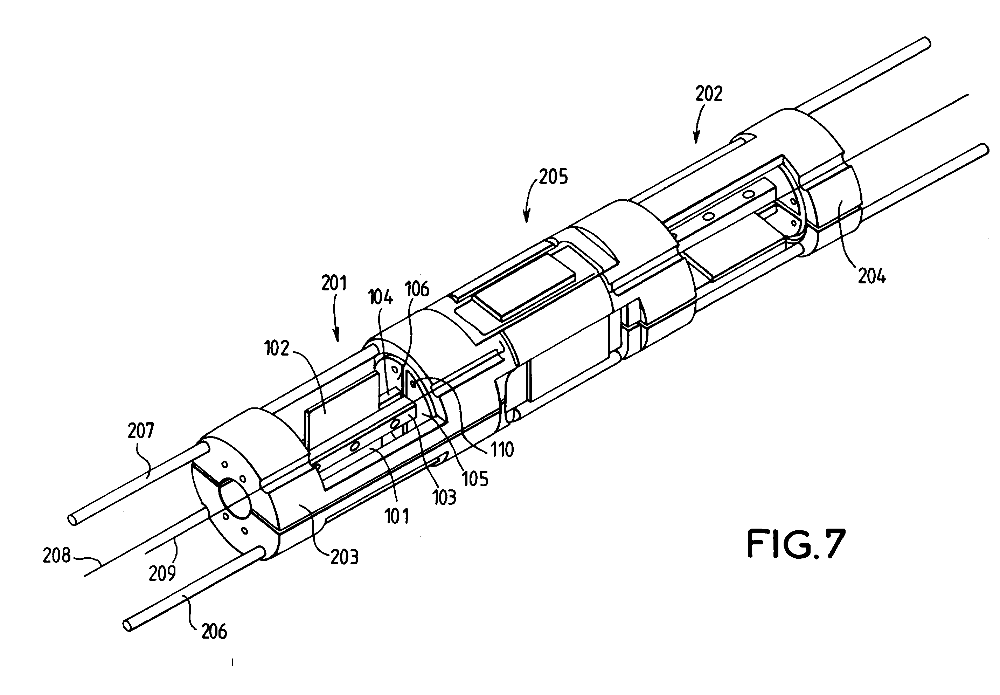

On a représenté sur la figure 7 une section d'antenne linéaire acoustique dans laquelle la peau extérieure a été enlevée pour permettre une représentation en crevé des organes intérieurs. Cette section comprend deux hydrophones 201 et 202 selon l'invention, qui sont fixés à l'intérieur de l'antenne avec les plans des bilames de respectivement chaque hydrophone perpendiculaires l'un à l'autre. Un hydrophone de pression (omnidirectionnel) est placé entre les hydros 201 et 202. De manière connue, ceci permet d'obtenir une caractéristique de réception en cardioïde par simple pondération des 3 signaux fournis.

Cette section comporte des organes centreurs 203 et 204 à l'intérieur desquels sont fixés les hydrophones 201 et 202 par l'intermédiaire des manchons amortisseurs 109 cités plus haut. Ces manchons ne sont pas visibles sur la figure, où l'on voit simplement certains des trous 1 10 dans lesquels ils sont fixés.

Les organes centreurs ont la forme de cylindres extérieurs dans lesquels viennent s'insérer les pièces 105 à 108 des hydrophones. Ces cylindres extérieurs sont réunis par des entretoises qui permettent de dégager un espace central dans lequel sont placés les hydrophones. Les ondes acoustiques pénètrent librement dans cet espace central par les dégagements latéraux compris entre les entretoises.

D'autres entretoises permettent de réunir les deux organes de l'hydrophone de pression et centrage du milieu 205 pour permettre de placer à l'intérieur de l'antenne en périphérie les organes électroniques qui servent à traiter les signaux issus des hydrophones.

L'ensemble est enfilé sur les câbles de reprise 206 et 207 des efforts de traction, qui courent le long de l'antenne linéaire acoustique. Les fils de connexion électriques 208 et 209 proviennent des circuits de traitements 205 et courent eux aussi le long de l'antenne pour permettre la transmission des signaux provenant de ces organes de traitement.

L'utilisation de l'hydrophone selon l'invention n'est pas limitée à son utilisation dans une antenne linéaire remorquée et peut se faire en particulier dans tous les appareillages sous-marins nécessitant des capteurs large bande à directivité intrinsèque.

## Revendications

1. Hydrophone à large bande, notamment pour antenne acoustique linéaire remorquée, du type comprenant au moins un bilame (101) encastré dans une monture inertielle (103-108), caractérisé en ce que la monture inertielle comprend deux poutres d'encastrement (103,104) reliées à deux masses d'inertie (105-108) situées respectivement aux deux extrémités des poutres (103,104), en ce qu'il comporte en outre un deuxième bilame (102) encastré entre les deux poutres de manière symétrique par rapport au premier bilame (101), et en ce que les bilames (101,102) forment deux parties d'un sandwich piézoélectrique encastré symétriquement entre les deux poutres (103, 104).

2. Hydrophone selon la revendication 1, caractérisé en ce que chaque bilame a une largeur au moins égale à sa longueur.

3. Hydrophone selon l'une quelconque des revendications 1 et 2, caractérisé en ce que ces deux masses d'inertie (105-108) sont formées chacune de deux sous-masses fixées respectivement à chacun des deux barreaux d'encastrement.

4. Hydrophone selon l'une quelconque des revendications 1 à 3, caractérisé en ce que les deux masses d'inertie ont la forme de deux cylindres coaxiaux à l'axe de l'hydrophone et qui comportent sur leurs faces d'extrémité extérieures des trous (110) permettant de fixer des manchons amortissant élastiques (109) destinés à fixer l'hydrophone de manière souple.

5. Hydrophone selon l'une quelconque des revendications 1 à 4, caractérisé en ce que la largeur de l'hydrophone est sensiblement égale à trois fois sa longueur.
